Europäisches Patentamt

European Patent Office

Office européen des brevets

(19)

(11) Publication number: **0 071 961**
A2

(12) # EUROPEAN PATENT APPLICATION

(21) Application number: **82107003.4**

(22) Date of filing: **03.08.82**

(51) Int. Cl.³: **B 01 D 29/08,** B 01 D 29/26

(30) Priority: **06.08.81 YU 1921/81**
**16.06.82 DE 3222627**

(43) Date of publication of application: **16.02.83**
**Bulletin 83/7**

(84) Designated Contracting States: **AT BE CH FR GB IT LI LU NL SE**

(71) Applicant: **Kojicic, Bozidar, Dr., 30 Lincoln Plaza App. 22H, New York, N.Y. 10023 (US)**

(72) Inventor: **Kojicic, Bozidar, Dr., 30 Lincoln Plaza App. 22H, New York, N.Y. 10023 (US)**

(74) Representative: **Prahl, Horst, Patentanwälte Menges & Prahl Erhardtstrasse 12, D-8000 München 5 (DE)**

(54) **Double walled screen-filter with perforated joints.**

(57) A well screen-filter includes a pair of substantially spaced concentric screens defining an annular filtrating space therebetween, connected with perforated joint(s) closing the lower end of the filtrating space, annular space filled up with filtrating materials (gravel or synthetic balls) as a pack and upper joints as cover caps of the annular filtrating space (seal of the pack). A lower perforated joint includes holes for passage of the fine particles to the sedimentation tube, preventing clogging of the pack and enables proper functioning of the double walled screen-filter.

DOUBLE WALLED SCREEN-FILTER WITH PERFORATED JOINTS

Technical Field

The present invention relates to well strainers, screen-filters and the like, employed in equipping oil, gas and water wells to protect sanding and silting in.

Background Art

Conventional screen-filters are used in many gas, oil and water wells to reduce sanding and silting in. These screen filters generally employ as filter material any of an artificial gravel pack poured into an annular space between the wall of the hole and the outside space of the screen, or a gravel pack formed by the formation gravel grains during development of the wells. The filter material is applied as a bonded-on pack into the slots of the screen or bonded-on as a coated pack on the outside space of a single screen with a special type of resin.

The wells with gravel pack into annular space must be drilled with large diameter to accommodate a minimum of a 76 mm (3") gravel pack thickness from each side  and to ensure that a required envelope of gravel will surround the entire screen. But generally, even in the large diameter hole having an adequate annular space, gravel is improperly packed. Therefore, this approach is costly and not effective to prevent sanding and silting in, particularly for deeper wells.

A pack formed by development only, from formation gravelgrains, also requires a large hole diameter with a very strong and special type of screen for long lasting development and very often without full success. Therefore, it is more costly and not effective, particularly not for protection of sanding and silting in.

A pack bonded-on outside or bonded-on into the screen openings from the gravel grains or the grains from the other materials is very costly, fragile and very sensitive for transportation and installation into the hole.

Such tightly packed grains reduce about three times the free flow areas, compared with the loosely packed grains.

Fine sand and silt entering into any of these gravel or other packs will drastically reduce porosity and permeability of the filtering system. When fine particles occupy openings between the coarser particles of the artificial gravel pack, i.e., when porosity and permeability are reduced, the velocity of the fluid flowing through the screen-filter will be drastically increased, causing abrasion and incrustation of the screen, reduction of the yield, with increased possibility of a collapse of the screen or casing.

Cleaning and maintenance of such well's screen-filters are very costly and hazardous. Therefore, the key to good well efficiency is effective screen-filter functioning which depends in turn upon the screen design.

Double walled well rings with gravel filling are known e.g.
from German Patent No. 120 313. The said prior type of well
rings consist of a porous cement double wall, the interspace of
which is filled with a filter medium, primarily gravel. Such
types of filter for wells, of course, are not only very heavy
and thus difficult to transport and to install, but also tend
to break easily; they are suitable only for relatively flat,
shallow wells, are attacked by corrosive substances, are subject
to reduced porosity and permeability and tend to be plugged by
sands and silts.

A double slotted tube filter is known from German Patent No.
511 302 the interspace of which, between outer and inner tube,
is filled with balls of equal diameter made of glass, earthenware or any other appropriate material. Said double slotted
tube filter consists of e.g. an outer thin walled copper tube,
an inner thin walled copper tube and reinforcing bushings made
of red bronze or brass, connecting the separate tube segments.
Such constructions are subject to severe corrosion because of
the formation of local elements which also tend to plug easily,
and undergo the risk of collapsing during pumping.

It is the object of the invention to provide a well strainer,
i.e., screen-filter, so constructed as to enable proper well
development, highest transmitting capacity under laminar flow
condition, eliminating sanding and silting in, either by pressure flow or pumping conditions. When the construction is made
from proper materials, incrustation and corrosion should be reduced or eliminated.

Disclosure of Invention

The double walled screen-filter according to the present invention comprises a pair of substantially spaced concentric and
cylindrical perforated or punched or slotted or wrapped screen
members positioned to define annular filtering space there_between, the lower perforated joints-rings, filtrating material
filled up into the annulus between two screens and upper cover cap, capable of being installed in a hole of a diameter just a little bit larger than the outside diameter of this new screen-filter.

Drilling a hole with smaller diameter is faster, easier and cheaper. Enlargement of a diameter of a hole considerably increases drilling cost but inadequately contributes to the increase of the water yield (see diagram: Relation of yield to water well diameter by Prinze).

The inner and outer screen members can be made of different materials, as for example, different type of polymer (PVC or other), fiber glass, carbon steel, stainless steel or alloy.

The outer screen should always be made of a stronger material and the inner screen can be made from a weaker material, because the outer screen is exposed to all pressure and tension and the inner is generally supporting only gravel or polymer's ball pack.

The inner and outer screen can be manufactured from the pipes or metal sheets, by perforation, punching and slotting or formed from metal bars and wires wrapped around the bars. The collapse strength of the double walled screen will be increased because of two jointed screens and therefore the total open area of both outer and inner screens can be accommodated and increased to the maximum, which in turn, means increase of the screen's transmitting capacity.

Possibility of manufacturing screen's members of the double walled screen from non-corrosive and inexpensive plastic materials, such as polyvinyl chloride (PVC), with high total open area, i.e., with a high transmitting capacity, according to the invention represents a big advantage in both design of the screen and economy. The transmitting capacity is the most important property of any screen and depends upon the total open area per foot (or per meter) of the screen, i.e. of the total open area per total length of the screen, quality of the

0071961

screen and the hydraulic properties of the aquifer and filtrating materials (gravel or polymer's balls pack). The most favourable screen's transmitting capacity is expressed as gallons per minute per foot, or liters per minute per meter, at the entrance velocity of 0,1 ft/s or 0,03 m/s (laminar flow), and therefore can be easily calculated from the total open area of the screen by multiplying the number of square inches of open area per foot by a factor of 0,31. Thus for the members of the double walled screen (inner and outer screens) total open area (over 10 percent and more) can be very easily adjusted, even for small diameter of outer and inner screens, in order to obtain the most favourable transmitting capacity.

Due to this fact, according to the invention, the total length and diameter of the double walled screen-filter can be considerably reduced, because of the possibility of obtaining the same quantity of fluid under favourable hydraulic conditions. This represents also the decreasing of the cost for the screen-filter, as compared to any other existing type of screen-filter, which is an important issue because the construction of the screen-filter is always the most expensive part of any well's construction.

Vertically perforated lower joints and upper solid cover cap can also be made from the same or different materials as the inner and outer screen members.

Vertically perforated lower joint is used to join inner and outer screen, to support gravel or polymer's balls pack material, to enable proper development of the well and to transfer finest particles into sedimentation tube (sand trap), which enter from the aquifer through outer screen to the gravel or polymer's balls pack.

The strength of the vertically perforated lower joint depends on the materials to be made, the length and diameter of the screen's segment, the annular space between two screens (inner and outer), type of pack materials, i.e., its total weight, depth and other conditions of the well.

Vertically perforated lower joint can therefore be attached to screens (inner and outer), by threads, inside and outside, or outside only, by welding or by cementing (for screen members made of PVC materials), or by other means.

Vertically perforated lower joint even with threads can be incorporated very easily between the threads of the ordinary threaded pipes and screen's threads, without any changes of the threads of joint system on the existing pipes and screens.

Vertical openings on the lower perforated joints have numerous holes. The size of the holes on the vertically perforated lower joints must be the same as slot openings of the outer screen, and the number depends upon the quality of the materials and space, although preferable to be as many as possible.

The filtering materials, gravel or polymer's balls pack, must be equally filled up in the annular space between inner and outer screen members. The size of these pack's grains depend upon the aquifer conditions (determined on the base of sieve analyses of the aquifer grain sizes), and must be bigger than slot sizes of screen's members. The filtering materials (gravel or polymer's balls pack) may be filled on the spot into screen's annular space during installation of the double walled screen, with the grain sizes as required by the bearing formation, thus making it possible to also fill in segment filtrating materials of different size in accordance to the changes of the granulation of the bearing formation column.

For example, the lowest part can be filled up with largest size of the gravel or polymer's balls, and above this column pack smaller grain sizes can be filled up, or vice versa.

Such loose filtrating materials (gravel or polymer's balls), particularly when they are well rounded grains and uniform, will possess more than double of a free flow area, or transmitting capacity than any densely packed filtrating material or almost three times higher free flow area or transmitting capacity than bonded-on screen either of the gravel or polymer's balls granules. Laboratory and field tests proved that the thickness of the filtrating materials (gravel or polymer's ball pack) filled up into the annular space between inner and outer screens could be very modest, i.e., about 25,4 mm (1") and successfully retains the finest formation particles regardless of the velocity of fluid tending to carry these fine particles through filtrating materials.

The upper joint, as solid cover cap on the top of the double walled screen-filter, is used only to seal filtrating materials in the annular filtrating space. It can be made from the same materials as the other members of the double walled screen, and connected only with the threads or by welding or by cementing or by other means for the inner screen.

Several field tests performed in water wells with double walled screen-filter (with gravel pack as filtrating materials), but without lower perforated joints did not give satisfactory results, neither during well development nor during pumping water, because of clogging filtrating materials with the fine particles from the water bearing formation. Further tests with the lower perforated joint did not cause any clogging or similar problems.

The tests have shown very clearly that the most important member of the double walled screen-filter construction and improvement of its construction are lower perforated joints, which enable proper cleaning and development of the bearing formation and cleaning of filtrating materials (gravel or polymer's ball pack) from the fine particles entering into filtrating materials from the bearing formation during development of the well, and makes possible easy and free passages of the finest particles into sedimentation part of the well (sedimentation pipe or sand trap) during pumping of lifting of fluids, thereby maintaining the effectiveness of the filtrating material for reliable double screen-filter operation.

Scuh double walled screen-filter with perforated lower joint, filtrating material and upper cover cap, according to the invention, can be constructed on the spot, during installation into the hole, which also represents considerable savings with respect to transport expenses, and installation.

The construction of this new screen-filter according to the invention may also fully satisfy all technical requirements related to mechanical strength, as for example: resistance to pressure, tension and stress during installation into a hole, including the resistance to denting from the effect of inside and outside pressure caused by formation conditions or by pressure and flow from aquifer through the screen-filter segments; or by a differential pressure into the well caused by any reason.

When the members of the double walled screen-filter are made of polymer materials, they are fully resistant to corrosion and destruction by bacteria and considerably resistant to incrustation.

The members of the double walled screen-filter with lower perforated joints to be installed in the deep wells, according to the invention, can be constructed from different materials. For example, the outside screen and lower perforated joint (particularly when the double walled screen is composed from only one segment) can be made from steel materials of a corresponding strength (preferable non-corrosive) as the sedimentation pipe and protecting casing, and inner screen and upper cover caps to be made from polymer material (such as PVC). Then, if the inner screen and upper cover cap are made of polymer material it would serve properly for the purpose of the double walled-screen, and if required for any reason can be easily destroyed and replaced together with filtrating material without any danger to the well.

The members of the double walled screen-filter and filtrating
material (either from gravel or polymer's ball pack) made
from polymer can also be very easily destroyed and replaced
when it is installed as construction into telescopic type of
well and particularly when the upper part of the well is cased
with a steel casing.

Another very important aspect of the invention is possibly the
mixing of concentrated dry chlorine pellets with filtrating
materials in order to desinfect the well, chlorinate the water,
destroy iron bacteria and inhibit incrustation.

This further contributes essentially to a prolongation of the
life expectance of the screen-filter and well, and improves a
well's performance.

Further benefits, features and aspects of the invention will
be apparent from the following description of the drawings.

Brief Description of Drawings

Fig. 1 is a general view of the double walled screen-filter
        segment according to the invention.

Fig. 2 is a longitudinal cross-sectional view of the double
        walled screen-filter in accordance with one embodiment
        of the present invention.

Fig. 3 is a sectional view taken through the line a-a of
        Figure 2.

Fig. 4 is a partial longitudinal cross-sectional view of double
        walled screen members.

Fig. 5 is a longitudinal cross-sectional view of the double
        walled screen-filter with joints when installed in a
        straight type of well construction.

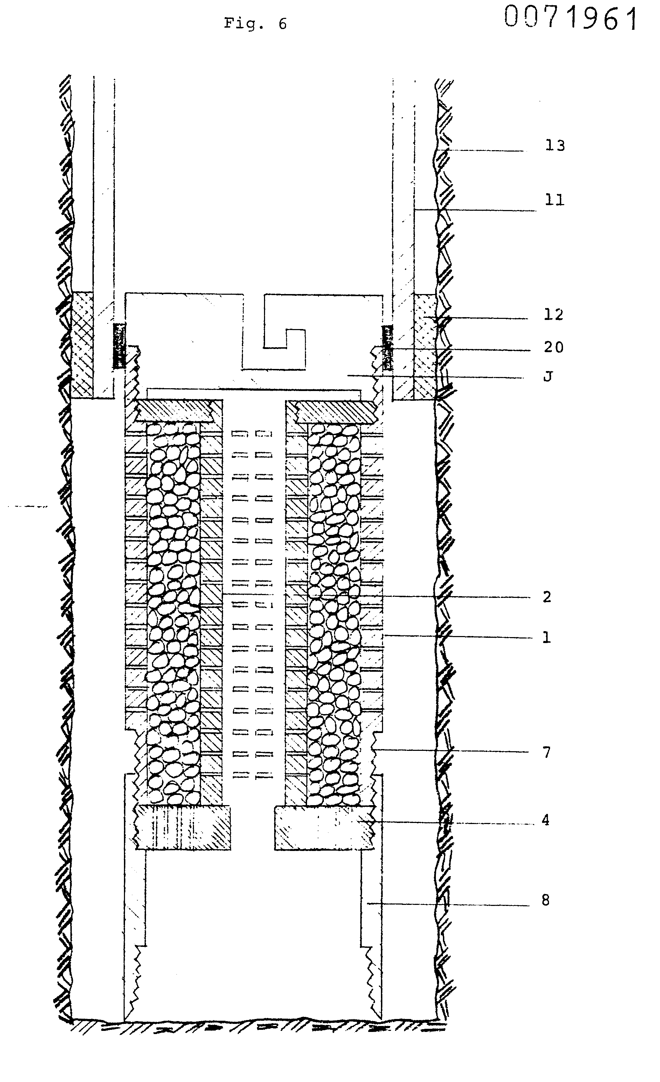

Fig. 6 is a longitudinal cross-sectional view of the double
        walled screen-filter with joints when installed in a
        telescopic type of well construction.

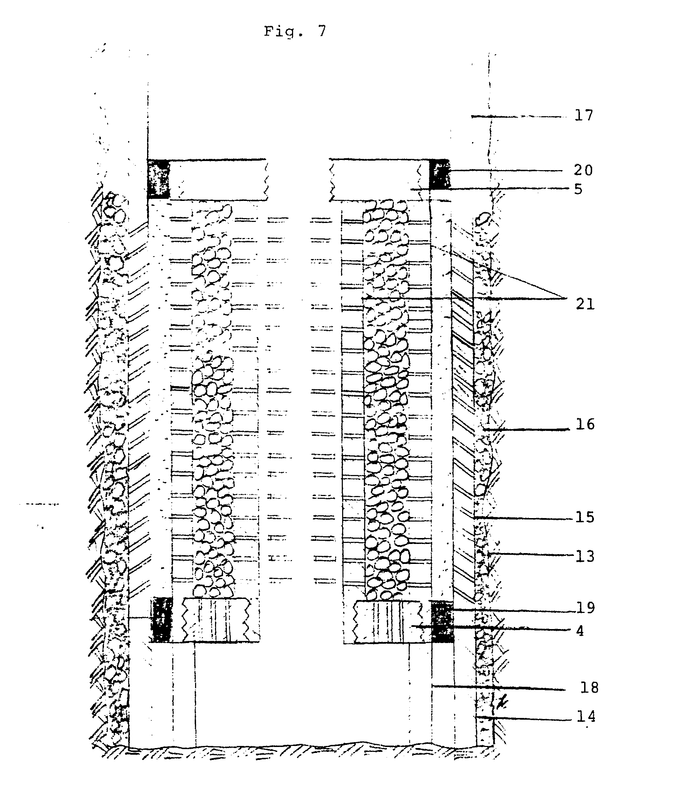

Fig. 7 is a longitudinal cross-sectional view of the double walled screen-filter with joints when installed in an existing well.

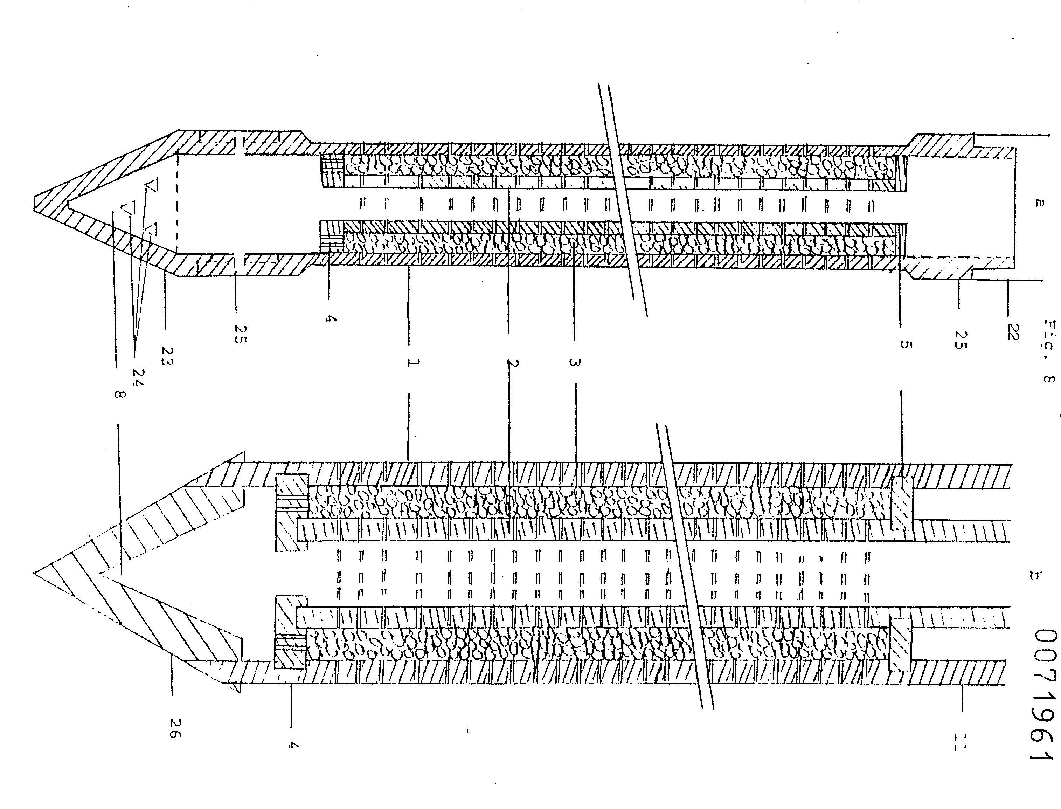

Fig. 8 a, b is a longitudinal cross-sectional view of the double walled screen-filter which can be installed in the well point and/or in the small diameter hole.

## Best Mode For Carrying Out The Invention

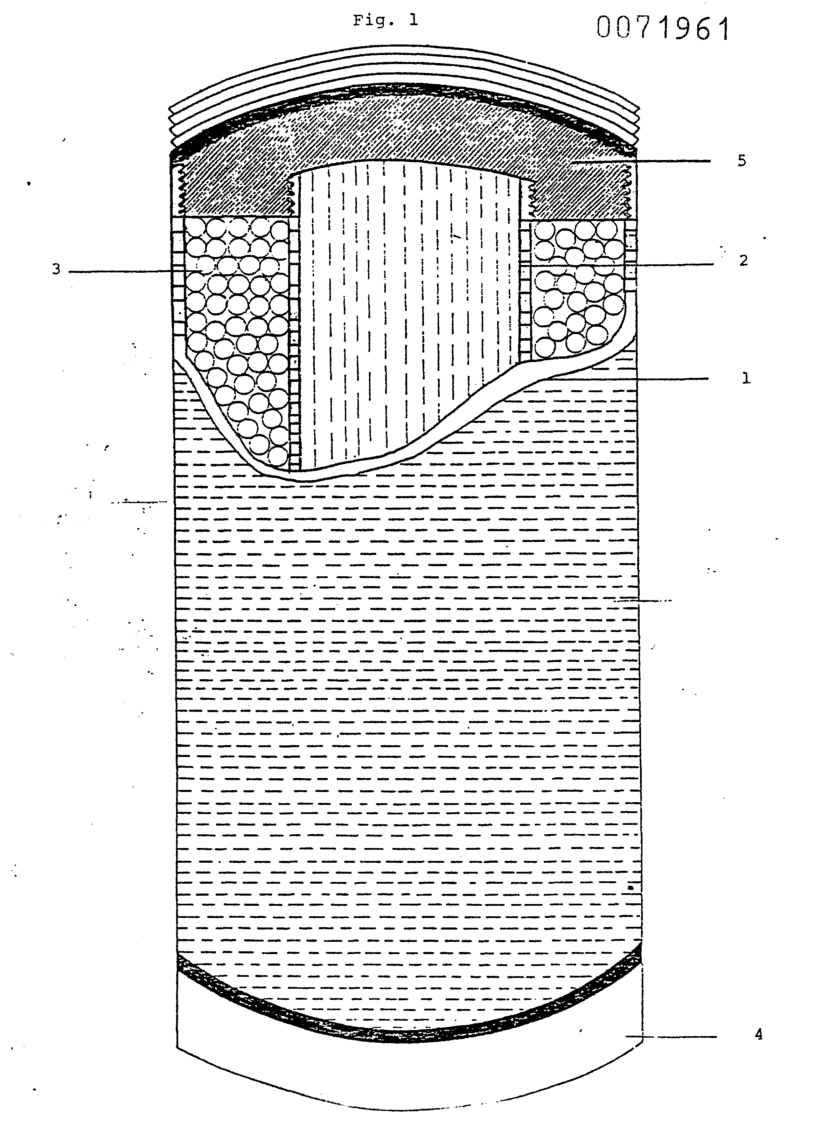

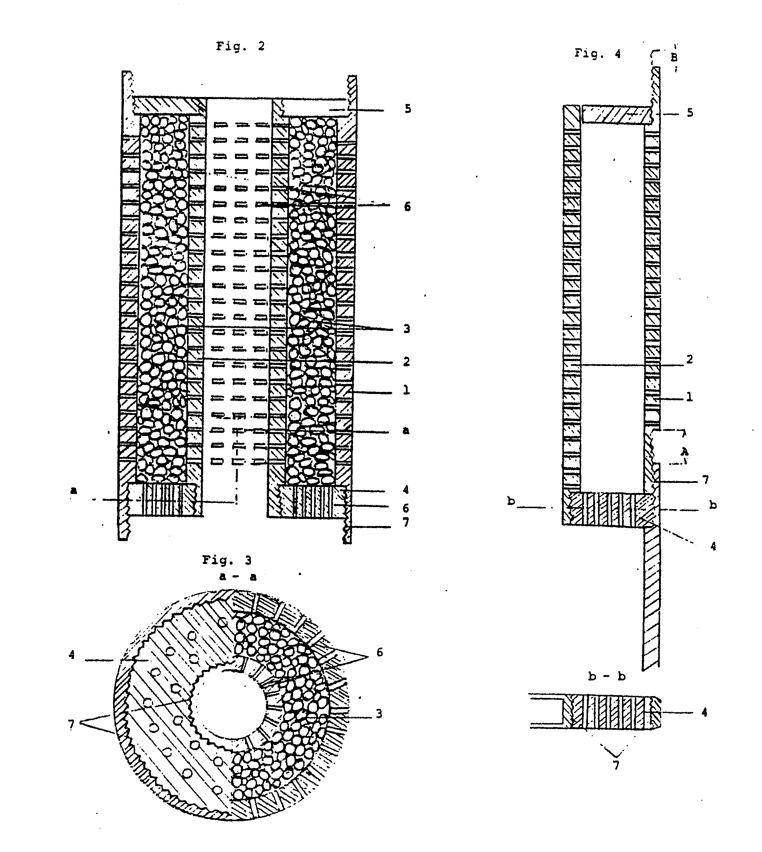

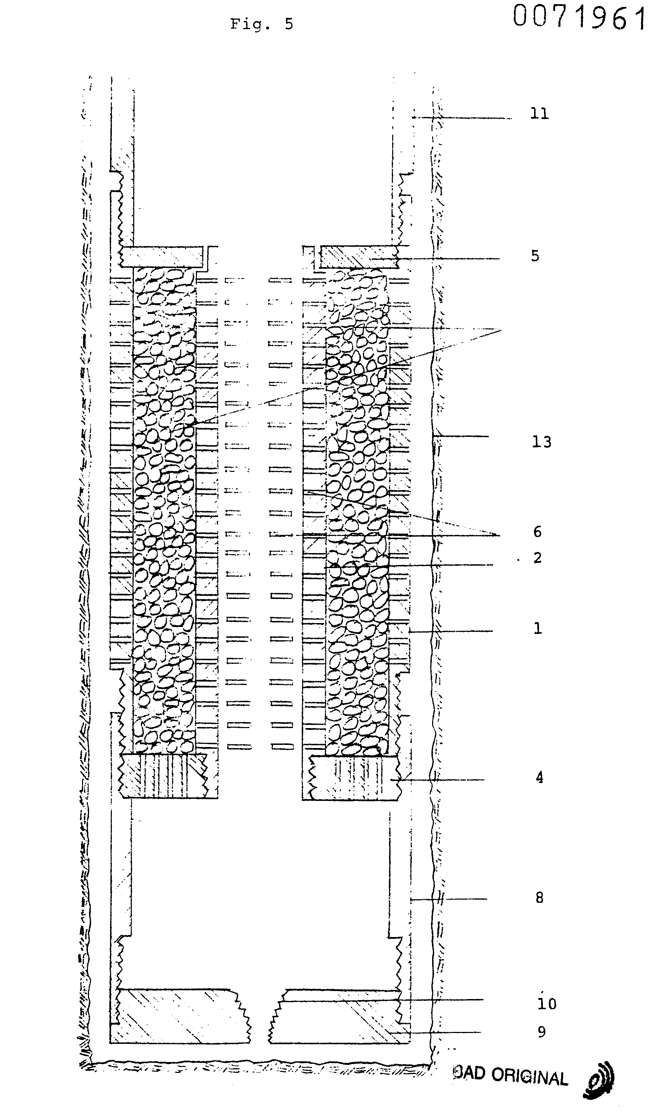

Referring to Figures 1 to 4, the numeral 1 represents an outer screen with its slot openings; 2 represents an inner screen with its slot openings; 3 is a loosely packed filtrating material (gravel or polymer's balls pack); 4 a lower perforated joint; 5 an upper joint cover cap; 6 are slots (holes); 7 are threads of joints; A is free space between upper part of screen threads and upper part of sedimentation tube threads when lower perforated joint is incorporated into existing threads of screen and sedimentation pipe and B is same as A, but for upper joint (5) between screen and casing i.e., for cover cap.

Referring to Figures 5 to 8, the numeral 8 represents a sedimentation tube, or cone (sand trap); 9 is a bottom cap of the well construction with the threads or other connection on the side; 10 is a hole with left hand threads in the middle of bottom cap; 11 represents a protective pipe-casing above the double walled screen-filters; 12 is cement ring (seal); J is an upper part of the double walled screen-filter construction for installation into the hole by hook; 13 is a hole; 14 is a previously installed sedimentation tube; 15 is a previously installed screen; 16 is a previously installed or formed gravel pack; 17 is a previously installed protective pipe-casing; 18 is new sedimentation tube; 19 is a lower packer; 20 is an upper packer; 21 is newly installed double walled screen-filter construction; 22 are driven pipes; 23 is a drive cone for wall point; 24 are jetting nozzles; 25 are threaded joints; and 26 is a spire.

0071961

The embodiment, as illustrated in Fig. 4, shows that the
lower perforated joint(s) is (are) threaded outside and inside
and incorporated into existing threads of screen-pipe in order
to couple inner and outer screen, although it can be threaded
only outside for connection with the outer screen and other
side for connection with the inner screen to be adjusted
accordingly so that the lower perforated joint will serve as
supporter of the inner screen and filtrating materials, or both
sides of the lower perforated joint(s) to be connected with the
inner and outer screen by welding or cementing, as already
explained. The upper joint-ring, as cover cap, shown in Fig. 4
is threaded only outside. It can be connected to inner and outer
screen by welding or cementing, or by other means.

The embodiment, as illustrated in Fig. 5 shows the double walled
screen-filter construction is directly connected with protective
pipe-casing, in so-called straight well construction. The
bottom cap with a hole in the middle with left hand threads is
connected to the sedimentation tube 8. The purpose of such
bottom cap construction is generally for the installation of
the whole well construction and well development with direct
circulation.

Installation of the whole well construction (or only screen-
filter construction in case of a telescopic type of well), is
performed with the pipe with left hand threads connected to
the bottom cap. Before final setting down of the well or screen-
filter construction, cleaning and development of the well are
performed through the same pipes which are used for the installation, with any corresponding fluid so that the double walled
screen and the walls of the well, particularly in the bearing
formation are properly washed. Later on, when the whole well
construction is properly lowered down at the hole bottom, and
left hand pipes unscrewed from the bottom cap, washing may also
be performed inside, in order to make sure of proper cleaning
of the double walled screen-filter construction.

Fig. 6 shows a telescopic type of well construction with installed double walled screen-filter in the lower part of a hole with a J slit for the installation with a hook assembly to the lowering pipes. The upper part of the double walled screen-filter construction is sealed with rubber packer 20 in order to prevent entrance of formation materials into the well through the annular space of the protective pipe-casing 11 and outside of the upper part of the double walled screen-filter construction. Therefore, when the double walled screen-filter construction is made of polymer's materials (such as PVC or similar) and installed into cased hole, particularly with steel pipe-casing (as upper part of the well construction), it may be easily demolished should any problems occur during the installation or later on and will, at the same time, preserve the water well from any damage. The lower part of the hole should only be recleaned and a new double walled screen-filter construction system installed again.

In Figure 7 is shown how the double walled screen-filter construction is installed in an existing well when sanding up represents a serious problem to either the fluid production or wearing out of the well pump, or screen.

The double walled screen-filter is installed inside the existing well screen with two packers 19 and 20. The lower 19 and upper 20 packers seal the annular space between the existing pipe-casing (sedimentation tube and protective pipe-casing) and the double walled screen-filter construction.

A redevelopment of the well and recleaning of the double walled screen-filter may be performed easily through the lower perforated joint(s), with any corresponding fluid.

In Figure 8 a, b is shown how the double walled screen-filter is used in well point or in the small diameter hole.

Therefore, for a well point, i.e., for driven wells, either the inner or outer screen can be made of perforated or slotted or
punched steel tube or similar construction of different diameter, attached to the well point cone (which is used also as
driving tool and later on as sand trap) and to a driving pipe
on the top, and construction with other screen-filter members
as any other double walled screen-filter.

For a drive well point according to the invention, as shown
in Fig. 8  a,  the outer screen of 63,5 mm (2-1/2") and inner
screen of 25,4 mm (1") nominal diameters, with a threaded joint
of an approximately 76  mm (3") outside diameter and a drive
cone with jetting nozzles on the cone and different slot sizes
(0,1-2 mm or over 2 mm) on the screens and proper granules of
the filtrating materials (gravel or polymer's loose balls pack)
will prevent any sanding and silting in.

Similar construction of the double walled screen-filter but
with spire as shown in Fig. 8 b can be used for a small diameter hole of any kind.

Summarized, the advantages of the new type of the double walled
screen filter construction are as follows:

     1. Production of fluids free of sand and silt from the
wells under favourable hydraulic conditions.

     2. Economy with regard  to the drilling cost of wells;
selection of the materials and manufacturing screen-filter;
transportation, installation and maintenance of the screen-
filter; prolongation of life  expectancy of the screen-filter
and the complete well construction; prolongation of life expectancy of the pumping units and water distribution system.

     3. Reduction of the screen's length and diameter due
to the possibility of obtaining a high total open area and the
most favourable hydraulic characteristics of the screen-filter;
reduction of the screen's construction weight and resistance to

- 14 -

0071961

corrosion, bacterial destruction, when using polymer materials.

4. Easy well development and maintenance of the double walled screen construction during production.

5. The possibility of replacing the entire lower part of the well construction (double walled screen-filter) when manufactured from polymer materials.

6. Using faster, more effective and cheaper well disinfection, water chlorination, and protection of well construction against bacteria and incrustation.

7. The possibility of manufacturing the same type of double walled screen-filter construction from considerably more resistant materials and under reasonable cost and using it in deep oil, gas or geothermal wells, where it is necessary to prevent sanding up.

0071961

<u>C l a i m s</u>

1. Double walled screen for wells made of the same or different materials, joined in segments, the annular space of which is filled with gravel or ball grains and characterized by a lower perforated joint (4).

2. Double walled screen according to claim 1, characterized in that the holes of the lower perforated joint (4) are of the same size as the size of the slots of the outside screen (1), which will enable proper well development and passage of the fine particles to the sedimentation tube.

3. Double walled screen according to claim 1 or 2, characterized in that the perforated joint (4) is used to connect inner screen (2) and outer screen (1).

4. Double walled screen according to any one of claims 1 to 3 characterized in that the perforated joint (4) supports loose gravel balls.

5. Double walled screen according to any one of claims 1 to 3 characterized in that the perforated joint (4) supports loose polymer balls.

6. Double walled screen according to any one of claims 1 to 5 characterized in that the grains (3) are of different size.

7. Double walled screen according to any one of claims 1 to 6 characterized in that said gravel or ball grains (3) are admixed with concentrated dry chlorine pellets.

Fig. 1

1/6

0071961

2/6

Fig. 2

Fig. 4

Fig. 3
a - a

b - b

11
5
13
6
2
1
4
8
10
9

Fig. 6

4/6

0071961

Fig. 7

— 17

— 20
— 5

21

16

15

13

19
4

18

14

Fig. 8

0071961